# EUROPÄISCHE PATENTSCHRIFT

(11) **EP 0 986 498 B1**
(45) Veröffentlichungstag und Bekanntmachung des Hinweises auf die Patenterteilung: **10.05.2006**
(21) Anmeldenummer: 98958818.1
(22) Anmeldetag: 22.10.1998
(51) Int. Cl.: B60T 8/00

(54) **VERFAHREN UND VORRICHTUNG ZUR REGELUNG WENIGSTENS EINER FAHRDYNAMIKGRÖSSE EINES FAHRZEUGES**
METHOD AND DEVICE FOR REGULATING AT LEAST ONE TRAVEL DYNAMIC VARIABLE IN A MOTOR VEHICLE
PROCEDE ET DISPOSITIF POUR LA REGULATION D'AU MOINS UNE GRANDEUR RELATIVE A LA DYNAMIQUE DE ROULEMENT D'UN VEHICULE

(30) Priorität: 25.03.1998 DE 19813019
(43) Veröffentlichungstag der Anmeldung: 22.03.2000
(73) Patentinhaber: ROBERT BOSCH GMBH, 70442 Stuttgart (DE)
(72) Erfinder: HARTMANN, Uwe, D-70839 Gerlingen (DE)
(86) Internationale Anmeldenummer: PCT/DE1998/003104
(87) Internationale Veröffentlichungsnummer: WO 1999/048735

(56) Entgegenhaltungen:
- EP-A- 0 249 431
- EP-A- 0 409 063
- DE-A- 3 045 888
- ZANTEN VAN A ET AL: "FDR - DIE FAHRDYNAMIK-REGELUNG VON BOSCH" ATZ AUTOMOBILTECHNISCHE ZEITSCHRIFT, Bd. 96, Nr. 11, 1. November 1994, Seiten 674-678, 683 - 689, XP000478694 in der Anmeldung erwähnt

## Beschreibung

### Stand der Technik

Die Erfindung betrifft ein Verfahren und eine Vorrichtung zur Regelung wenigstens einer Fahrdynamikgröße eines Fahrzeuges. Solche Verfahren und Vorrichtungen sind aus dem Stand der Technik in vielerlei Modifikationen bekannt.

Aus dem in der Automobiltechnischen Zeitschrift (ATZ) 96, 1994, Heft 11, auf den Seiten 674 bis 689 erschienenen Veröffentlichung "FDR - die Fahrdynamikregelung von Bosch" , ist ein System zur Regelung der Fahrdynamik eines Fahrzeuges bekannt. Bei diesem System wird wenigstens ausgehend vom Lenkradwinkel und der Fahrzeuggeschwindigkeit jeweils ein Sollwert für den Schwimmwinkel bzw. die Giergeschwindigkeit bestimmt. Die Sollwerte für den Schwimmwinkel bzw. die Giergeschwindigkeit werden zusammen mit den entsprechenden Istwerten einem Zustandsregler zugeführt, der aus den entsprechenden Regelabweichungen Fahrzeugsollgiermomente ermittelt. Diese Fahrzeugsollgiermomente werden unter Berücksichtigung der aktuellen Schlupfwerte in Sollschlupfänderungen an geeigneten Rädern umgerechnet. Die Sollschlupfänderungen werden durch die unterlagerten ABS- bzw. ASR-Radregler realisiert. Bei diesem System ist die Durchführung einer Fluchtwende, bei der durch Betätigung der Feststellbremse ein oder zwei Hinterräder zum Blockieren gebracht werden, nicht vorgesehen.

Aus der EP 0 394 387 B1 (entspricht der US 5,255,194) ist ein Antiblockierregelsystem bekannt, welches eine Schleudererkennung enthält. Wird ein Schleudern des Fahrzeuges festgestellt, so werden die Vorderräder durch Bremsen in hohen Schlupf gebracht, insbesondere blockiert. Alternativ ist vorgesehen, bei Schleudererkennung zumindest teilweise das Antiblockiersystem abzuschalten.

Dokument EP-A-0 249 431 offenbart das Abschalten einer Antriebsschlupfregelung bei einer aktivierten Parkbremse.

Die Aufgabe der vorliegenden Erfindung besteht darin, Systeme zur Regelung der Fahrdynamik eines Fahrzeuges dahingehend zu verbessern, daß mit Fahrzeugen, die mit solchen Systemen ausgestattet sind, auch die Durchführung einer Fluchtwende möglich ist.

### Vorteile der Erfindung

Systeme zur Regelung der Fahrdynamik eines Fahrzeuges, nachfolgend Fahrdynamikregelsysteme genannt, wie sie beispielsweise in der vorstehend erwähnten Veröffentlichung "FDR - die Fahrdynamikregelung von Bosch" beschrieben sind, versuchen unter allen Bedingungen ein stabiles Fahrzeugverhalten aufrechtzuerhalten. Dies bedeutet, daß die Fahrzeuglängsachse ungefähr mit der Bewegungsrichtung des Fahrzeuges übereinstimmt. Die Abweichung zwischen Fahrzeuglängsachse und Bewegungsrichtung des Fahrzeuges wird durch den Schwimmwinkel charakterisiert. Der Schwimmwinkel sollte nicht größer als etwa 5 bis 10° werden, da sonst der Fahrzustand als "stark übersteuernd" definiert wird, der dann schnell in "Schleudern" übergehen kann. Eine Hauptaufgabe von Fahrdynamikregelsystemen ist, dieses Schleudern zu verhindern. Dazu wird durch Bremseneingriffe an geeigneten Rädern ein Giermoment auf das Fahrzeug so aufgebracht, daß die Fahrzeuglängsachse zur Bewegungsrichtung des Fahrzeuges hingedreht wird.

Es gibt jedoch auch Fälle, in denen die oben beschriebene Stabilisierung des Fahrzeugs unerwünscht ist. Dies trifft vor allem für sogenannte Sonderschutzfahrzeuge für gefährdete Personen und Fahrzeuge von Sicherheitsdiensten zu. Hier müssen die Fahrer in der Lage sein, das Fahrzeug während der Fahrt schnell um 180° zu drehen. Solch ein Fahrmanöver wird als Fluchtwende bezeichnet. Bei der Fluchtwende werden durch betätigen der Feststellbremse ein oder zwei Hinterräder zum Blockieren gebracht, nachdem durch geeignete Lenkbewegungen eine Gierbewegung eingeleitet wurde. Infolge der blockierenden Hinterräder fehlt an der Hinterachse die Seitenkraft, um die Gierbewegung zu stoppen, das Fahrzeug dreht sich.

Ein Fahrdynamikregelsystem wird an dieser Stelle ein.Vorderrad stark abbremsen, um auch an der Vorderachse die Seitenkraft zu reduzieren. Das Fahrzeug rutscht in einem solchen Fall seitlich weg, dreht sich aber nicht ausreichend.

Um auch bei Fahrzeugen, die mit einem Fahrdynamikregelsystem ausgestattet sind, eine mit Hilfe der Feststellbremse ausgelöste Drehung um 180° zu ermöglichen, muß diese Situation erkannt und die stabilisierenden Bremseneingriffe an der Vorderachse oder ein sonstiger Stabilisierungseingriff durch das Fahrdynamikregelsystem vorübergehend unterbunden werden.

Hierzu enthält die erfindungsgemäße Vorrichtung zur Regelung wenigstens einer Fahrdynamikgröße eines Fahrzeuges vorteilhafterweise Mittel, mit denen festgestellt wird, ob oberhalb eines vorgegebenen Wertes für die Fahrzeuggeschwindigkeit eine Betätigung der in dem Fahrzeug enthaltenen Feststellbremse, die insbesondere auf die Hinterräder wirkt, vorliegt.

Die erfindungsgemäße Vorrichtung enthält ferner Mittel, mit denen wenigstens in Abhängigkeit der Fahrdynamikgröße Ansteuersignale und/oder Ansteuergrößen ermittelt werden. Mit diesen Ansteuersignalen und/oder Ansteuergrößen werden Mittel zur Durchführung von Bremseneingriffen und/oder Motoreingriffen im Sinne einer Regelung der wenigstens einen Fahrdynamikgröße angesteuert. Liegt oberhalb des vorgegebenen Wertes für die Fahrzeuggeschwindigkeit eine Betätigung der Feststellbremse vor, so werden vorteilhafter Weise keine im Sinne der Regelung der wenigstens einen Fahrdynamikgröße durchzuführenden Bremseneingriffe und/oder Motoreingriffe ausgeführt.

Hierzu bieten sich vorteilhafter Weise zwei Vorgehensweisen an. Liegt eine erfindungsgemäße Betätigung der Feststellbremse vor, so werden entweder keine Ansteuersignale und/oder Ansteuergrößen ermittelt oder für die Ansteuersignale und/oder Ansteuergrößen werden vorgegebene Werte, insbesondere der Wert Null, ausgegeben.

Besonders vorteilhaft ist es, wenn für den Fall, bei dem eine erfindungsgemäße Betätigung der Feststellbremse vorliegt, zumindest für die Vorderräder des Fahrzeuges die Bremseneingriffe und/oder die Motoreingriffe, die im Sinne einer Regelung der wenigstens einen Fahrdynamikgröße durchgeführt werden sollen, unwirksam gemacht und/oder unterdrückt werden. Dadurch wird erreicht, daß die Vorrichtung zur Regelung wenigstens einer Fahrdynamikgröße des Fahrzeuges an den Vorderrädern die Seitenkraft nicht reduzieren kann und somit die Durchführung einer Fluchtwende erst ermöglicht wird.

Zur Feststellung, ob eine erfindungsgemäße Betätigung der Feststellbremse vorliegt, enthält die erfindungsgemäße Vorrichtung vorteilhafterweise zum einen Mittel, mit denen erste Radgrößen ermittelt werden, und zum anderen Mittel, mit denen zweite Radgrößen ermittelt werden. Da diese Feststellung ohne zusätzliche Sensorik auskommen soll, werden vorteilhafterweise als erste bzw. zweite Radgrößen solche verwendet, die bereits in Zusammenhang mit der Regelung der wenigstens einen Fahrdynamikgröße des Fahrzeuges vorhanden sind. Hierzu werden als erste Radgrößen Radgeschwindigkeitsgrößen ermittelt, die die Radgeschwindigkeiten der Räder beschreiben. Als zweite Radgrößen werden Druckgrößen ermittelt, die die in den Radbremszylindern der Räder vorherrschenden Bremsdrücke beschreiben. Die Betätigung der Feststellbremse wird insbesondere in Abhängigkeit der ersten und/oder zweiten Radgrößen der Räder festgestellt, auf die die Feststellbremse wirkt.

Die Radgeschwindigkeitsgrößen werden wenigstens in Abhängigkeit von Raddrehzahlgrößen ermittelt, die mit Hilfe von Raddrehzahlsensoren erfaßt werden. Für die Ermittlung der Druckgrößen bieten sich zwei Vorgehensweisen an. Zum einen werden die Druckgrößen vorteilhafterweise unter Verwendung eines mathematischen Modells ermittelt. In diesem Fall hängen die Druckgrößen wenigstens von einer Vordruckgröße, die den vom Fahrer eingestellten Vordruck beschreibt, und die vorzugsweise mit Hilfe eines Drucksensors erfaßt wird, und von den Ansteuersignalen und/oder Ansteuergrößen für die Mittel zur Durchführung von Bremseneingriffen ab. Diese Vorgehensweise hat den Vorteil, daß auf die in der Vorrichtung zur Regelung wenigstens einer Fahrdynamikgröße des Fahrzeuges bereits vorhandenen Sensoren zurückgegriffen werden kann. Alternativ bietet sich eine Erfassung der Druckgrößen mit Hilfe von Drucksensoren an, die den Rädern zugeordnet sind.

Um wie bereits oben erwähnt, auf einen Schalter, der eine Betätigung der Feststellbremse anzeigt, verzichten zu können, wird die erfindungsgemäße Betätigung der Feststellbremse vorteilhafterweise wie folgt ermittelt: Eine Betätigung der Feststellbremse liegt dann vor, wenn für wenigstens eines der Räder, auf die die Feststellbremse wirkt, die entsprechende erste Radgröße kleiner als ein erster charakteristischer Wert ist, und wenn die entsprechende zweite Radgröße kleiner als ein zweiter charakteristischer Wert ist. Diese Vorgehensweise bietet sich deshalb an, da eine Betätigung der Feststellbremse sich dadurch bemerkbar macht, daß die Räder, auf die die Feststellbremse wirkt, gebremst werden, d.h. im Vergleich zur Fahrzeuggeschwindigkeit eine kleinere Geschwindigkeit aufweisen, obwohl in den Radbremszylindern dieser Räder kein Bremsdruck vorhanden ist.

Alternativ bietet sich zur Feststellung, ob eine Betätigung der Feststellbremse vorliegt, folgende weitere Vorgehensweise an: Eine Betätigung der Feststellbremse liegt dann vor, wenn für wenigstens eines der Räder, auf die die Feststellbremse wirkt, die zeitliche Änderung der entsprechenden ersten Radgröße größer als ein dritter charakteristischer Wert ist, und wenn die entsprechende zweite Radgröße kleiner als der zweite charakteristische Wert ist.

Zusammenfassend kann festgehalten werden, daß eine Betätigung der Feststellbremse dann vorliegt, wenn ausgehend von den Radgeschwindigkeitsgrößen und den Druckgrößen festgestellt wird, daß sich die entsprechenden Radgeschwindigkeiten der Räder, auf die die Feststellbremse wirkt, verringern, obwohl diese Räder nahezu ungebremst sind.

Alternativ zu der eingangs erwähnten Vorgehensweise, bei der bei Vorliegen einer Betätigung der Feststellbremse keine Bremseneingriffe und/oder Motoreingriffe ausgeführt werden, bietet es sich vorteilhafterweise an, daß die den Bremseneingriffen und/oder Motoreingriffen zugrundeliegenden Ansteuersignale und/oder Ansteuergrößen in Abhängigkeit einer Größe ermittelt werden, die die Betätigung der Feststellbremse charakterisiert.

Weitere Vorteile sowie vorteilhafte Ausgestaltungen können den Unteransprüchen, der Zeichnung sowie der Beschreibung des Ausführungsbeispiels entnommen werden.

### Zeichnung

Die Zeichnung besteht aus den Figuren 1 bis 3. Figur 1 zeigt in einer Übersichtsanordnung die erfindungsgemäße Vorrichtung zur Durchführung des erfindungsgemäßen Verfahrens. Figur 2 zeigt mit Hilfe eines Ablaufdiagrammes eine Ausführungsform zur Durchführung des erfindungsgemäßen Verfahrens. Figur 3 stellt in einem Blockschaltbild die prinzipielle Wirkungsweise der erfindungsgemäßen Vorrichtung dar.

Es sei darauf hingewiesen, daß Böcke mit derselben Bezeichnung in unterschiedlichen Figuren dieselbe Funktion haben.

### Ausführungsbeispiel

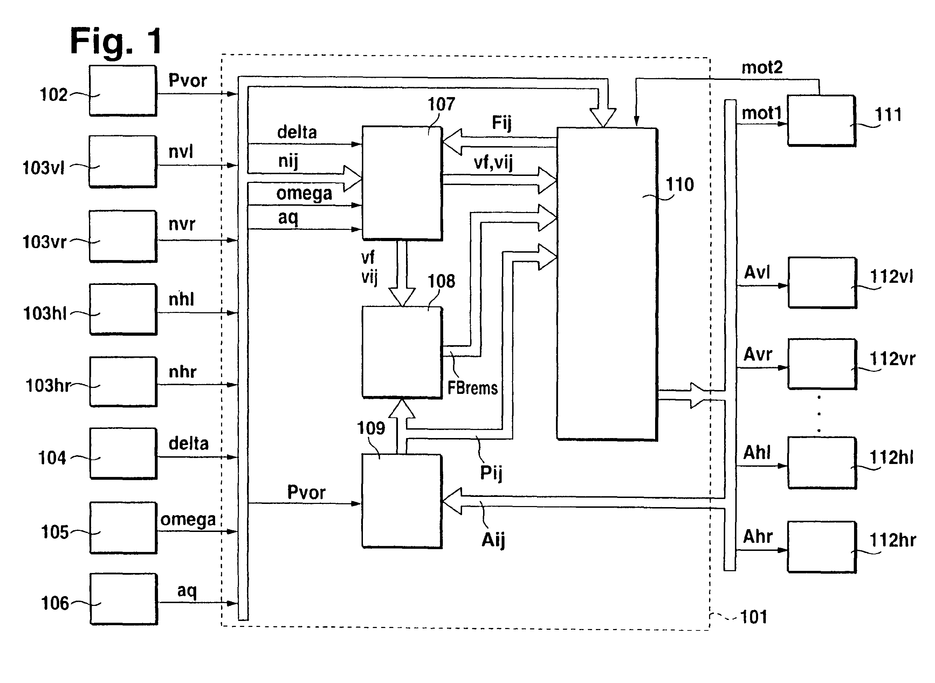

Zunächst soll auf Figur 1 eingegangen werden.

Block 101 stellt die erfindungsgemäße Vorrichtung zur Regelung wenigstens einer Fahrdynamikgröße eines nicht dargestellten Fahrzeuges dar. Hierbei handelt es sich bei Block 101 für üblich um ein Steuergerät.

Mit den Blöcken 102, 103ij, 104, 105 bzw. 106 sind Mittel dargestellt, mit denen die für eine Vorrichtung zur Regelung wenigstens einer Fahrdynamikgröße, wie sie in der vorstehend erwähnten Veröffentlichung "FDR - die Fahrdynamikregelung von Bosch" beschrieben ist, spezifischen Fahrzeuggrößen erfaßt werden. Der Block 102 stellt einen Drucksensor dar, mit dem eine Vordruckgröße Pvor, die den vom Fahrer eingestellten Vordruck beschreibt, erfaßt wird. Die Blöcke 103v1, 103vr, 103hl sowie 103hr stellen Raddrehzahlsensoren dar, mit denen für die Räder entsprechende Raddrehzahlgrößen nvl, nvr, nhl sowie nhr erfaßt werden. Nachfolgend wird für die Raddrehzahlsensoren die vereinfachende Schreibweise 103ij eingeführt. Dabei gibt der Index i an, ob sich der Raddrehzahlsensor an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend.

Der Block 104 stellt einen Lenkwinkelsensor dar, mit dem der vom Fahrer eingestellte Lenkwinkel delta erfaßt wird. Der Block 105 stellt einen Gierratensensor dar, mit dem die Gierrate omega des Fahrzeuges, d.h. die Drehgeschwindigkeit des Fahrzeuges um seine Hochachse erfaßt wird. Der Block 106 stellt einen Querbeschleunigungssensor dar, mit dem die auf das Fahrzeug wirkende Querbeschleunigung aq erfaßt wird. Die Größe omega stellt die Fahrdynamikgröße des Fahrzeuges dar, die mit der erfindungsgemäßen Vorrichtung geregelt wird.

Die vorstehend beschriebene Sensorik ist für die sogenannten Fahrdynamikregelsysteme, wie sie in der vorstehend erwähnten Veröffentlichung "FDR - die Fahrdynamikregelung von Bosch" beschrieben sind, charakteristisch.

Die mit der Sensorik erfaßten Größen Pvor, nij, delta, omega sowie aq werden einem Block 110, der den im Steuergeräte 101 implementierten Regler darstellt, und der noch zu beschreiben ist, zugeführt.

Die Größen delta, nij, omega sowie aq werden einem Block 107 zugeführt. Neben diesen Eingangsgrößen werden dem Block 107, ausgehend vom Block 110, Größen Fij, die die Reifenaufstandskräfte bzw. Reifenbremskräfte der entsprechenden Räder beschreiben, zugeführt. Ausgehend von den ihm zugeführten Größen werden im Block 107 eine die Fahrzeuggeschwindigkeit beschreibende Größe vf sowie erste Radgrößen vij, die Radgeschwindigkeitsgrößen darstellen und die die Radgeschwindigkeiten der Räder beschreiben, ermittelt. Die Größen vf sowie vij werden ausgehend vom Block 107 einem Block 108 sowie dem Block 110 zugeführt.

Entsprechend der oben aufgeführten Veröffentlichung "FDR - die Fahrdynamikregelung von Bosch" werden die Radgeschwindigkeitsgrößen vij wie folgt ermittelt: Zunächst werden ausgehend von den Raddrehzahlgrößen nij und den Reifenbremskräften bzw. Reifenaufstandskräften Fij sogenannten freirollende, d.h. schlupffreie Radgeschwindigkeiten für die entsprechenden Räder ermittelt. Ausgehend von diesen freirollenden Radgeschwindigkeiten werden unter Berücksichtigung der Fahrzeugbewegung, die durch die Größen delta, omega bzw. aq beschrieben wird, die Radgeschwindigkeitsgrößen vij ermittelt. Die Fahrzeuggeschwindigkeit vf wird in bekannter weise ausgehend von den Radgeschwindigkeitsgrößen vij ermittelt.

Im Block 109 werden zweite Radgrößen Pij ermittelt. Bei diesen zweiten Radgrößen handelt es sich um Druckgrößen, die die in den Radbremszylindern der Räder vorherrschenden Bremsdrücke beschreiben. Die Druckgrößen Pij werden beispielsweise, wie in der oben erwähnten Veröffentlichung "FDR
- die Fahrdynamikregelung von Bosch" beschrieben, in Abhängigkeit vom Vordruck Pvor und in Abhängigkeit von Ansteuersignalen und/oder Ansteuergrößen Aij für Mittel 112ij, mit denen Bremseneingriffe durchgeführt werden, ermittelt. Diese Ansteuersignale und/oder Ansteuergrößen Aij repräsentieren beispielsweise die Ansteuerzeiten von den entsprechenden Radbremszylindern zugeordneten Ventilen. Die Ermittlung der Druckgrößen Pij erfolgt hierbei unter Verwendung eines mathematischen Modells. Die Druckgrößen Pij werden ausgehend vom Block 109 dem Block 108 sowie dem Block 110 zugeführt.

Alternativ zu der vorstehend beschriebenen Ermittlung der Druckgrößen Pij bietet sich an, diese Druckgrößen mit Hilfe von Drucksensoren, die den entsprechenden Rädern zugeordnet sind, zu erfassen.

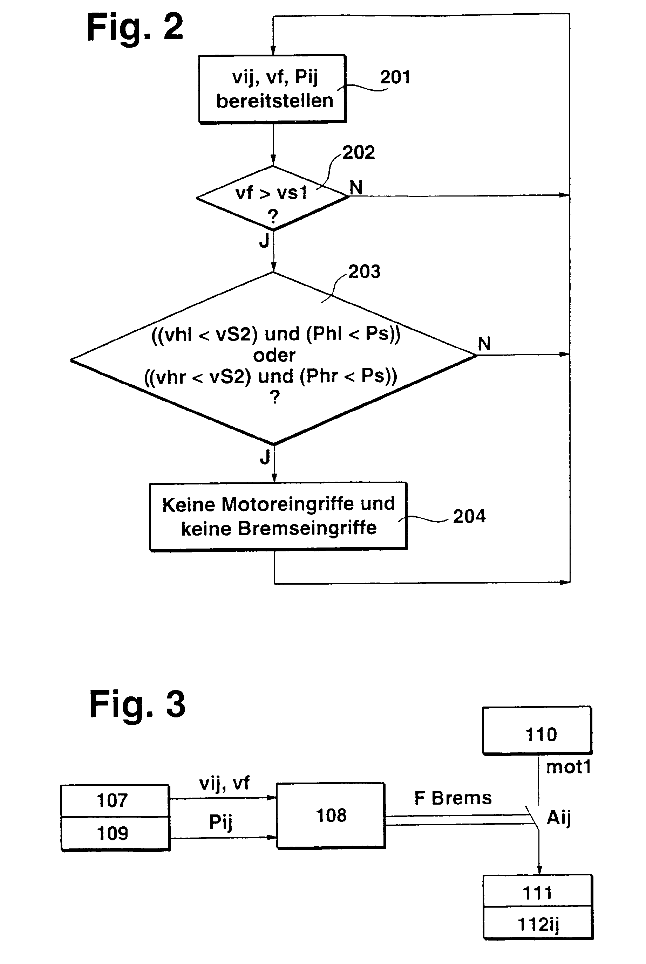

Im Block 108 läuft die erfindungsgemäße Ermittlung ab, mit der festgestellt wird, ob oberhalb eines vorgegebenen Wertes für die Fahrzeuggeschwindigkeit eine Betätigung der im Fahrzeug enthaltenen Feststellbremse vorliegt. Auf diese erfindungsgemäße Ermittlung wird im Zusammenhang mit Figur 2 noch ausführlich eingegangen. Ausgehend von der im Block 108 stattfindenden Ermittlung wird dem Block 110 mit Hilfe der Größe FBrems mitgeteilt, ob eine Betätigung der Feststellbremse vorliegt oder nicht.

Mit 110 ist der im Steuergerät 101 implementierte Regler bzw. Fahrzeugregler bezeichnet. Dieser enthält gleichzeitig auch eine Ansteuerlogik für den Motor 111 und die Aktuatoren 112ij. Bei dem Regler 110 handelt es sich um einen, der in seiner Grundfunktion eine die Fahrdynamik beschreibende Größe, beispielsweise eine die Gierrate des Fahrzeuges beschreibende Größe durch Bremseneingriffe und/oder durch Motoreingriffe regelt. An dieser Stelle sei auf die vorstehend erwähnte Veröffentlichung "FDR - die Fahrdynamikregelung von Bosch" verwiesen. Alternativ kann es sich bei dem Regler 110 beispielsweise auch um einen Bremsschlupfregler und/oder um einen Antriebsschlupfregler handeln.

Die im Block 110 in ihrer Grundfunktion stattfindende Regelung basiert in bekannter Weise auf den ihm zugeführten Größen Pvor, nij, delta, omega, aq sowie einer Größe mot2, die beispielsweise die Motordrehzahl des Motors 111 beschreibt und die ausgehend von dem Motor 111 dem Block 110 zugeführt wird.

Zusätzlich zu der im Block 110 in der Grundfunktion implementierten Regelung wird eine erfindungsgemäße Betätigung der Feststellbremse berücksichtigt, mit der durch den Fahrer eine sogenannte Fluchtwende realisiert werden soll.

Der Regler 110 erzeugt Ansteuersignale und/oder Ansteuergrößen mot1 bzw. Aij, mit denen der Motor 111 sowie die dem Fahrzeug zugeordneten Aktuatoren 112ij angesteuert werden. Bezüglich der Erzeugung der Größen mot1 bzw. Aij gemäß der für die Grundfunktion implementierten Regelung wird auf die vorstehend aufgeführte Veröffentlichung "FDR - die Fahrdynamikregelung von Bosch" verwiesen. Liegt eine erfindungsgemäße Betätigung der Feststellbremse vor, die dem Regler 110 durch die Größe FBrems mitgeteilt wird, so werden die vom Regler 110 auszugebenden Größen mot1 bzw. Aij entsprechend modifiziert. Die Größen mot1 bzw. Aij werden so modifiziert, daß durch den Motor 111 bzw. die Aktuatoren 112ij keine im Sinne der Regelung der wenigstens einen Fahrdynamikgröße durchzuführenden Bremseneingriffe und/oder Motoreingriffe ausgeführt werden. Zu diesem Zweck werden beispielsweise keine Ansteuersignale und/oder Ansteuergrößen mot1 bzw. Aij ermittelt oder diesen werden vorgegebene Werte, insbesondere der Wert Null zugewiesen.

In erster Linie werden die Ansteuersignale und/oder Ansteuergrößen mot1 bzw. Aij so erzeugt, daß zumindest für die Vorderräder des Fahrzeuges die Bremseneingriffe und/oder die Motoreingriffe, die im Sinne einer Regelung der wenigstens einen Fahrdynamikgröße durchgeführt werden sollen, unwirksam gemacht und/oder unterdrückt werden.

Bei den Aktuatoren 112ij handelt es sich beispielsweise um solche, mit denen an den entsprechenden Rädern eine Bremskraft erzeugbar ist. Mit Hilfe der Ansteuergröße mot1 wird beispielsweise die Drosselklappenstellung des Motors beeinflußt. Mit Hilfe der Ansteuergrößen Aij werden die Aktuatoren 112ij so beeinflußt, daß an den entsprechenden Rädern unterschiedliche Bremskräfte erzeugt werden.

Die Aktuatoren 112ij, die insbesondere den Radbremszylindern zugeordneten Ventilen entsprechen, mit denen der entsprechende Radbremszylinder mit Bremsmedium beaufschlagt wird, können Teil einer hydraulischen, einer elektrohydraulischen, einer pneumatischen, einer elektropneumatischen oder einer rein elektrischen Bremsanlage sein.

Im folgenden wird mit Hilfe von Figur 2 das in der erfindungsgemäßen Vorrichtung ablaufende erfindungsgemäße Verfahren beschrieben.

Das erfindungsgemäße Verfahren beginnt mit einem Schritt 201, in welchem die Größen vij, vf sowie Pij bereitgestellt werden. Die Radgeschwindigkeitsgrößen vij, die die ersten Radgrößen darstellen, sowie die Fahrzeuggeschwindigkeit vf werden, wie im Zusammenhang mit Figur 1 beschrieben, im Block 107 ermittelt. Die Druckgrößen Pij, die die zweiten Radgrößen beschreiben, werden im Block 109 ermittelt. Anschließend an den Schritt 201 wird ein Schritt 202 ausgeführt.

Im Schritt 202 wird ermittelt, ob die Fahrzeuggeschwindigkeit vf größer als ein charakteristischer Wert vs1 für die Fahrzeuggeschwindigkeit ist. Die im Schritt 202 stattfindende Geschwindigkeitsabfrage ist deshalb erforderlich, da eine Fluchtwende nur dann durchgeführt werden kann, wenn das Fahrzeug eine gewisse Geschwindigkeit aufweist. Mit anderen Worten: Nur in dem Fall, in dem die Fahrzeuggeschwindigkeit größer als ein vorgegebener Wert ist, ist mit Blick auf eine eventuell durchzuführende Fluchtwende eine Überwachung der Feststellbremse erforderlich. Folglich wird für den Fall, bei dem im Schritt 202 ermittelt wurde, daß die Fahrzeuggeschwindigkeit größer als der charakteristische Wert vs1 ist, anschließend an den Schritt 202 ein Schritt 203 ausgeführt. Ist die im Schritt 202 stattfindende Abfrage dagegen nicht erfüllt, so wird im Anschluß an den Schritt 202 erneut der Schritt 201 ausgeführt.

Im Schritt 203 findet die eigentliche Feststellung, ob eine Betätigung der Feststellbremse vorliegt, statt. Diese Feststellung wird in Abhängigkeit erster und zweiter Radgrößen durchgeführt, wobei als erste bzw. zweite Radgrößen die Radgeschwindigkeitsgrößen vij bzw. die Druckgrößen Pij verwendet werden. Die Feststellung, ob eine Betätigung der Feststellbremse vorliegt, wird ausgehend von den Radgrößen der Räder, auf die die Feststellbremse wirkt, d.h. ausgehend von den entsprechenden Radgrößen der Hinterräder durchgeführt.

Wird mit der Feststellbremse während der Fahrt eine Bremskraft auf die Hinterräder aufgebracht, so bleiben die Hinterräder im Extremfall stehen, d.h. sie blockieren, obwohl in den entsprechenden Radbremszylindern kein Bremsdruck eingespeist wird. Diese Tatsache wird zur Erkennung der Betätigung der Feststellbremse ausgenutzt.

Die im Schritt 203 stattfindende Abfrage setzt sich aus zwei Teilabfragen zusammen, für jedes Hinterrad eine Teilabfrage. Eine Betätigung der Feststellbremse liegt dann vor, wenn wenigstens eine der beiden Teilabfragen erfüllt ist, d.h. wenn für wenigstens eines der Räder, auf die die Feststellbremse wirkt, die entsprechende erste Radgröße kleiner als ein erster charakteristischer Wert, insbesondere kleiner als ein erster Schwellenwert ist, und wenn die entsprechende zweite Radgröße kleiner als ein zweiter charakteristischer Wert, insbesondere kleiner als ein zweiter Schwellenwert ist.

Im vorliegenden Fall setzt sich die im Schritt 203 stattfindende Abfrage aus einer ersten Teilabfrage für das linke Hinterrad und einer zweiten Teilabfrage für das rechte Hinterrad zusammen. In der ersten Teilabfrage wird überprüft, ob die Radgeschwindigkeit vhl des linken Hinterrades kleiner als der erste charakteristische Wert vs2 ist, und ob gleichzeitig die Druckgröße Phl des linken Hinterrades kleiner als der zweite charakteristische Wert Ps ist. In der zweiten Teilabfrage wird überprüft, ob die Radgeschwindigkeit vhr des rechten Hinterrades kleiner als der erste charakteristische Wert vs2 ist, und ob gleichzeitig die Druckgröße Phr des rechten Hinterrades kleiner als der zweite charakteristische Wert Ps ist. Die im Schritt 203 stattfindende Abfrage ist dann erfüllt, wenn wenigstens eine der beiden Teilabfragen erfüllt ist.

Wird im Schritt 203 festgestellt, daß die in ihm durchgeführte Abfrage erfüllt ist, so wird anschließend an den Schritt 203 ein Schritt 204 ausgeführt. Wird im Schritt 203 dagegen festgestellt, daß die in ihm durchgeführte Abfrage nicht erfüllt ist, so wird anschließend an den Schritt 203 erneut der Schritt 201 ausgeführt.

An dieser Stelle sei bemerkt, daß für die oben beschriebene Feststellung der Betätigung der Feststellbremse auch folgende Alternative denkbar ist: Anstelle des Vergleiches der Radgeschwindigkeit des entsprechenden Hinterrades mit dem ersten charakteristischen Wert kann auch ein Vergleich der zeitlichen Änderung der entsprechenden Radgeschwindigkeit mit einem dritten charakteristischen Wert durchgeführt werden, wobei der vorstehend beschriebene Vergleich der entsprechenden Druckgröße mit dem zweiten charakteristischen Wert beibehalten bleibt. Ferner sei bemerkt, daß die Schritte 202 bzw. 203 im Block 108 ablaufen.

Die in Figur 1 enthaltene Größe FBrems ist in Figur 2 nicht dargestellt, da sie für die Darstellung in Figur 2 nicht benötigt wird. Der Vollständigkeit halber sei jedoch erwähnt, daß die Größe FBrems dann generiert wird, wenn die im Schritt 203 stattfindende Abfrage erfüllt ist.

Wird mit der im Schritt 203 stattfindenden Abfrage festgestellt, daß oberhalb eines vorgegebenen Wertes für die Fahrzeuggeschwindigkeit eine Betätigung der Feststellbremse vorliegt, so wird anschließend der Schritt 204 ausgeführt, durch den bei Vorliegen einer solchen Betätigung keine im Sinne der Regelung der wenigstens einen Fahrdynamikgröße durchzuführenden Bremseneingriffe und/oder Motoreingriffe ausgeführt werden. In diesem Zusammenhang sei auf die Ausführungen im Rahmen der Figur 1 verwiesen.

Anschließend an den Schritt 204 wird erneut der Schritt 201 ausgeführt.

Mit Hilfe des in Figur 3 dargestellten Blockschaltbildes soll die prinzipielle Idee der erfindungsgemäßen Vorrichtung bzw. des erfindungsgemäßen Verfahrens dargestellt werden.

Mit Hilfe des Blockes 107 werden, wie im Zusammenhang mit Figur 1 beschrieben, die Radgeschwindigkeitsgrößen vij sowie die Fahrzeuggeschwindigkeit vf ermittelt. Diese Größe werden dem Block 108 zugeführt. Mit Hilfe des Blockes 109 werden, wie ebenfalls im Zusammenhang mit Figur 1 beschrieben, die Druckgrößen Pij ermittelt, die dem Block 108 zugeführt werden. Im Block 108 wird festgestellt, ob oberhalb eines vorgegebenen Wertes für die Fahrzeuggeschwindigkeit eine Betätigung der Feststellbremse vorliegt. In Abhängigkeit dieser Feststellung erzeugt der Block 108 ein Signal FBrems.

Mit Hilfe des Reglers 110 werden die Ansteuergrößen und/oder Ansteuersignale mot1 bzw. Aij zur Betätigung des Motors 111 bzw. der Aktuatoren 112ij ermittelt. Wie in Figur 3 durch den symbolischen Schalter angedeutet, wird in Abhängigkeit der Größe bzw. des Signals FBrems festgelegt, ob der Motor 111 bzw. die Aktuatoren 112ij mit Hilfe der vom Regler 110 ermittelten Ansteuersignale und/oder Ansteuergrößen mot1 bzw. Aij beaufschlagt werden. Wird im Block 108 festgestellt, daß keine erfindungsgemäße Betätigung der Feststellbremse vorliegt, so ist der Schalter geschlossen, und der Motor 111 sowie die Aktuatoren 112ij werden durch die Ansteuersignale und/oder Ansteuergrößen entsprechend beaufschlagt. Wird dagegen im Block 108 festgestellt, daß eine erfindungsgemäße Betätigung der Feststellbremse vorliegt, so ist der Schalter geöffnet, eine Beaufschlagung des Motors 111 bzw. der Aktuatoren 112ij findet nicht statt.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

## Patentansprüche

1. Vorrichtung zur Regelung einer die Gierrate eines Fahrzeuges beschreibenden Fahrdynamikgröße (omega),
die Mittel (108) enthält, mit denen festgestellt wird, ob oberhalb eines vorgegebenen Wertes (vs1) für die Fahrzeuggeschwindigkeit, eine Betätigung einer in dem Fahrzeug enthaltenen Feststellbremse, die insbesondere auf die Hinterräder wirkt, vorliegt,
wobei bei Vorliegen einer solchen Betätigung keine im Sinne der Regelung der wenigstens einen Fahrdynamikgröße durchzuführenden Bremseneingriffe und/oder Motoreingriffe ausgeführt werden.

2. Vorrichtung nach Anspruch 1, **dadurch gekennzeichnet,**
**daß** Mittel (107) vorhanden sind, mit denen erste Radgrößen (vij) ermittelt werden, und/oder
**daß** Mittel (109) vorhanden sind, mit denen zweite Radgrößen (Pij) ermittelt werden, und
**daß** die Betätigung der Feststellbremse in Abhängigkeit der ersten und/oder der zweiten Radgrößen festgestellt wird, insbesondere wird die Betätigung in Abhängigkeit der ersten und/oder der zweiten Radgrößen der Räder festgestellt, auf die die Feststellbremse wirkt.

3. Vorrichtung nach Anspruch 2, **dadurch gekennzeichnet,**
**daß** als erste Radgrößen Radgeschwindigkeitsgrößen (vij) ermittelt werden, die die Radgeschwindigkeiten der Räder beschreiben, und/oder
**daß** als zweite Radgrößen Druckgrößen (Pij) ermittelt werden, die die in den Radbremszylindern der Räder vorherrschenden Bremsdrücke beschreiben.

4. Vorrichtung nach Anspruch 3, **dadurch gekennzeichnet,**
**daß** die Radgeschwindigkeitsgrößen wenigstens in Abhängigkeit von Raddrehzahlgrößen (nij) ermittelt werden, die insbesondere mit Hilfe von Raddrehzahlsensoren (103ij) erfaßt werden, und/oder
**daß** die Druckgrößen, insbesondere unter Verwendung eines mathematischen Modells, wenigstens in Abhängigkeit einer Vordruckgröße (Pvor), die den vom Fahrer eingestellten Vordruck beschreibt, und die vorzugsweise mit Hilfe eines Drucksensors (102) erfaßt wird, und in Abhängigkeit von Ansteuersignalen und/oder Ansteuergrößen für Mittel (112ij) zur Durchführung von Bremseneingriffen, ermittelt werden, oder
**daß** die Druckgrößen mit Hilfe von Drucksensoren, die den Rädern zugeordnet sind, erfaßt werden.

5. Vorrichtung nach Anspruch 2, **dadurch gekennzeichnet,**
**daß** eine Betätigung der Feststellbremse dann vorliegt,
wenn für wenigstens eines der Räder, auf die die Feststellbremse wirkt, die entsprechende erste Radgröße (vhj) kleiner als ein erster charakteristischer Wert (vs2), insbesondere kleiner als ein erster Schwellenwert, ist, und wenn die entsprechende zweite Radgröße (Phj) kleiner als ein zweiter charakteristischer Wert (Ps), insbesondere kleiner als ein zweiter Schwellenwert, ist, oder
**daß** eine Betätigung der Feststellbremse dann vorliegt,
wenn für wenigstens eines der Räder, auf die die Feststellbremse wirkt, die zeitliche Änderung der entsprechenden ersten Radgröße (vhj) größer als ein dritter charakteristischer Wert, insbesondere größer als ein dritter Schwellenwert, ist, und wenn die entsprechende zweite Radgröße (Phj) kleiner als der zweite charakteristische Wert (Ps) ist.

6. Vorrichtung nach Anspruch 1, **dadurch gekennzeichnet,**
**daß** Mittel (110) vorhanden sind, mit denen wenigstens in Abhängigkeit der Fahrdynamikgröße Ansteuersignale und/oder Ansteuergrößen (mot1, Aij) ermittelt werden, mit denen Mittel zur Durchführung von Bremseneingriffen (112ij) und/oder Motoreingriffen (111) im Sinne einer Regelung der wenigstens einen Fahrdynamikgröße angesteuert werden, und
**daß** für den Fall, bei dem eine Betätigung der Feststellbremse vorliegt, keine Ansteuersignale und/oder Ansteuergrößen ermittelt werden, oder
**daß** für den Fall, bei dem eine Betätigung der Feststellbremse vorliegt, für die Ansteuersignale und/oder für die Ansteuergrößen vorgegebene Werte, insbesondere der Wert Null, ausgegeben werden.

7. Vorrichtung nach Anspruch 3, **dadurch gekennzeichnet,**
**daß** eine Betätigung der Feststellbremse dann vorliegt, wenn ausgehend von den Radgeschwindigkeitsgrößen und den Druckgrößen festgestellt wird, daß sich die entsprechenden Radgeschwindigkeiten der Räder, auf die die Feststellbremse
wirkt, verringern, obwohl diese Räder nahezu ungebremst sind.

8. Vorrichtung nach Anspruch 1, **dadurch gekennzeichnet,**
**daß** für den Fall, bei dem eine Betätigung der Feststellbremse vorliegt, zumindest für die Vorderräder des Fahrzeuges die Bremseneingriffe und/oder die Motoreingriffe, die im Sinne einer Regelung der wenigstens einen Fahrdynamikgröße durchgeführt werden sollen, unwirksam gemacht und/oder unterdrückt werden.

9. Verfahren zur Regelung einer die Gierrate eines Fahrzeuges beschreibenden Fahrdynamikgröße (omega),
bei dem festgestellt wird, ob oberhalb eines vorgegebenen Wertes (vs1) für die Fahrzeuggeschwindigkeit, eine Betätigung einer in dem Fahrzeug enthaltenen Feststellbremse, die insbesondere auf die Hinterräder wirkt, vorliegt,
wobei bei Vorliegen einer solchen Betätigung keine im Sinne der Regelung der wenigstens einen Fahrdynamikgröße durchzuführenden Bremseneingriffe und/oder Motoreingriffe ausgeführt werden.

## Claims

1. Device for controlling a vehicle movement dynamics variable (omega) which describes the yaw rate of a vehicle,
said device containing means (108) with which it is detected whether a parking brake which is contained in the vehicle and which acts in particular on the rear wheels is activated above a predefined value (vs1) for the speed of the vehicle,
wherein when such activation takes place no braking interventions and/or engine interventions which are to be carried out in the sense of controlling the at least one vehicle movement dynamics variable are executed.

2. Device according to Claim 1, **characterized in that** means (107) are present with which first wheel variables (vij) are determined, and/or
**in that** means (109) are present with which second wheel variables (Pij) are determined, and
**in that** the activation of the parking brake is detected as a function of the first and/or second wheel variables,
in particular the activation is detected as a function of the first and/or the second wheel variables of the wheels on which the parking brake acts.

3. Device according to Claim 2, **characterized in that** wheel speed variables (vij) which describe the wheel speeds of the wheels are determined as first wheel variables, and/or
**in that** pressure variables (Pij) which describe the brake pressures prevailing in the wheel brake cylinders of the wheels are determined as second wheel variables.

4. Device according to Claim 3, **characterized in that** the wheel speed variables are determined at least as a function of wheel rpm variables (nij) which are sensed in particular using wheel rpm sensors (103ij), and/or
**in that** the pressure variables are determined in particular using a mathematical model, at least as a function of an admission pressure variable (Pvor) which describes the admission pressure set by the driver and which is preferably sensed using a pressure sensor (102), and are determined as a function of actuation signals and/or actuation variables for means (112ij) for carrying out braking interventions, or **in that** the pressure variables are sensed using pressure sensors which are assigned to the wheels.

5. Device according to Claim 2, **characterized in that** the parking brake is activated if the corresponding first wheel variable (vhj) is smaller than a first characteristic value (vs2), in particular smaller than a first threshold value, for at least one of the wheels on which the parking brake acts, and if the corresponding second wheel variable (Phj) is smaller than a second characteristic value (Ps), in particular smaller than a second threshold value, or
**in that** the parking brake is activated if the change in the corresponding first wheel variable (vhj) at the time is greater for at least one of the wheels on which the parking brake acts than a third characteristic value, in particular greater than a third threshold value, and if the corresponding second wheel variable (Phj) is smaller than the second characteristic value (Ps).

6. Device according to Claim 1, **characterized in that** means (110) are present with which actuation signals and/or actuation variables (mot1, Aij) are determined at least as a function of the vehicle movement dynamics variable and said actuation signals and/or actuation variables (mot1, Aij) are used to actuate means for carrying out braking interventions (112ij) and/or engine interventions (111) in the sense of controlling the at least one vehicle movement dynamics variable, and
**in that** if the parking brake is activated, no actuation signals and/or actuation variables are determined, or
**in that** if the parking brake is activated, values which are predefined for the actuation signals and/or for the actuation variables, in particular the value zero, are output.

7. Device according to Claim 3, **characterized in that** the parking brake is activated if it is detected on the basis of the wheel speed variables and the pressure variables that the corresponding wheel speeds of the wheels on which the parking brake acts decrease even though these wheels are virtually unbraked.

8. Device according to Claim 1, **characterized in that** if the parking brake is activated, the braking interventions and/or the engine interventions which are to be carried out in the sense of controlling the at least one vehicle movement dynamics variable are deactivated and/or suppressed at least for the front wheels of the vehicle.

9. Method for controlling a vehicle movement dynamics variable (omega) which describes the yaw rate of a vehicle,
in which it is detected whether a parking brake which is contained in the vehicle and which acts in particular on the rear wheels is activated above a predefined value (vs1) for the speed of the vehicle,
wherein when such activation takes place no braking interventions and/or engine interventions which are to be carried out in the sense of controlling the at least one vehicle movement dynamics variable are executed.

## Revendications

1. Dispositif pour la régulation d'une grandeur de dynamique de roulage (oméga) décrivant le taux de lacet d'un véhicule,
qui renferme des moyens (108) permettant de constater si, au-dessus d'une valeur prédéfinie (vs1) pour la vitesse du véhicule, il y a un actionnement d'un frein de stationnement présent dans le véhicule qui agit en particulier sur les roues arrière, et dans lequel
en cas de présence d'un tel actionnement, on effectue aucune intervention sur le frein et/ou aucune intervention sur le moteur, à effectuer dans le sens de la régulation d'au moins une grandeur de dynamique de roulage.

2. Dispositif selon la revendication 1,
**caractérisé en ce que**
des moyens (107) permettent de déterminer des premières grandeurs de roue (vij) et/ou
des moyens (109) permettent de déterminer des deuxièmes grandeurs de roue (Pij), et
l'actionnement du frein de stationnement est constaté en fonction des premières et/ou deuxièmes grandeurs de roue, et en particulier en fonction des premières et/ou deuxièmes grandeurs de roue on constate l'actionnement des roues sur lesquelles agit le frein de stationnement.

3. Dispositif selon la revendication 2,
**caractérisé en ce que**
comme premières grandeurs de roue on détermine les grandeurs de vitesse des roues (vij), qui décrivent les vitesses des roues, et/ou on détermine comme deuxièmes grandeurs de roue, les grandeurs de pression (Pij), qui décrivent les pressions de freinage régnant dans les cylindres de frein des roues.

4. Dispositif selon la revendication 3,
**caractérisé en ce que**
les grandeurs de vitesse de roue sont déterminées au moins en fonction de grandeurs de vitesse de rotation des roues (nij) détectées en particulier à l'aide de capteurs de vitesse de rotation des roues (103ij), et/ou
les grandeurs de pression en particulier lorsqu'on utilise un modèle mathématique, sont déterminées au moins en fonction de la grandeur de pression d'alimentation (Pvor), qui décrit la pression d'alimentation fixée par le conducteur et qui est détectée de préférence à l'aide d'un capteur de pression (102), et en fonction de signaux de pilotage et/ou de grandeurs de pilotage pour des moyens (112ij) destinés à l'exécution d'interventions sur les freins, ou les grandeurs de pression sont détectées à l'aide de capteurs de pression qui sont associés aux roues.

5. Dispositif selon la revendication 2,
**caractérisé en ce qu'**
il y a un actionnement du frein de stationnement si au moins pour l'une des roues sur laquelle le frein de stationnement agit, la première grandeur de roue (vhj) correspondante est inférieure à une première valeur caractéristique (vs2), en particulier inférieure à une première valeur de seuil, et si la deuxième grandeur de roue (Phj) correspondante est inférieure à une deuxième valeur caractéristique (Ps), en particulier inférieure à une deuxième valeur de seuil, ou
il y a un actionnement du frein de stationnement lorsque pour au moins une des roues, sur laquelle le frein de stationnement agit, la modification dans le temps de la première grandeur de roue (vhj) correspondante est supérieure à une troisième valeur caractéristique, en particulier supérieure à une troisième valeur de seuil et lorsque la deuxième grandeur de roue (Phj) correspondante est inférieure à la deuxième valeur caractéristique (Ps).

6. Dispositif selon la revendication 1,
**caractérisé en ce que**
des moyens (110) permettent de déterminer, au moins en fonction de la grandeur de dynamique de roulage, des signaux de pilotage et/ou des grandeurs de pilotage (mot1, Aij), avec lesquels des moyens d'exécution d'interventions sur les freins (112ij) et/ou d'interventions sur le moteur (111) sont pilotés dans le sens d'une régulation de l'une au moins des grandeurs de dynamique de roulage, et
dans le cas où il y a un actionnement du frein de stationnement, aucun signal de pilotage et/ou grandeur de pilotage n'est déterminé ou
dans le cas où il y a un actionnement du frein de stationnement, on produit des valeurs prédéfinies pour les signaux de pilotage et/ou pour les grandeurs de pilotage, en particulier la valeur zéro.

7. Dispositif selon la revendication 3,
**caractérisé en ce qu'**
il y a un actionnement du frein de stationnement lorsqu'à partir des grandeurs de vitesse de roue et des grandeurs de pression, on constate que les vitesses de roue correspondantes des roues sur lesquelles le frein de stationnement agit, se réduisent bien que ces roues soient pratiquement non freinées.

8. Dispositif selon la revendication 1,
**caractérisé en ce que**
dans le cas où il y a un actionnement du frein de stationnement, du moins pour les roues avant du véhicule, les interventions sur les freins et/ou les interventions sur le moteur, qui doivent être exécutées dans le sens d'une régulation d'au moins une des grandeurs de dynamique de roulage, sont rendues inefficaces et/ou sont supprimées.

9. Procédé de régulation d'une grandeur de dynamique de roulage (oméga) décrivant le taux de lacet d'un véhicule permettant de constater si, au-dessus d'une valeur prédéfinie (vs1) pour la vitesse du véhicule, il y a un actionnement d'un frein de stationnement présent dans le véhicule qui agit en particulier sur les roues arrière,
aucune intervention sur le frein et/ou aucune intervention sur le moteur, à effectuer dans le sens de la régulation d'au moins une grandeur de dynamique de roulage, n'étant effectuée en cas de présence d'un tel actionnement.
